# FASCICULE DE BREVET EUROPEEN

(11) **EP 0 358 543 B1**
(45) Date de publication et mention de la délivrance du brevet: **20.10.1993**
(21) Numéro de dépôt: 89402234.2
(22) Date de dépôt: 08.08.1989
(51) Int. Cl.: B01D 24/00, B01D 29/00, B01D 35/18

(54) **Appareil de séparation d'au moins deux éléments contenus dans un fluide gazeux ou liquide à l'aide d'un matériau filtrant ou absorbant**
Vorrichtung zum Schneiden von mindestens zwei Elementen in einem Gas oder in einer Flüssigkeit mit einem Filter- oder Absorptionsmaterial
Apparatus for separating at least two elements present in a gaseous or a liquid fluid with the aid of a filtering or adsorbing material

(30) Priorité: 19.08.1988 FR 8811069
(43) Date de publication de la demande: 14.03.1990
(73) Titulaire: Centre Technique Industriel dit: INSTITUT TEXTILE DE FRANCE, 92223 Bagneux Cédex (FR)
(72) Inventeur: Combes, Jean-François, F-69001 Lyon (FR); Chatelin, Roger, Lissieu F-69380 Lozanne (FR); Wattiez, Daniel, Lissieu F-69380 Lozanne (FR); Gavet, Louis, F-69005 Lyon (FR)
(74) Mandataire: Hénnion, Jean-Claude

(56) Documents cités:
- EP-A- 0 100 994
- EP-A- 0 152 711
- EP-A- 0 259 000
- DE-C- 354 076
- FR-A- 2 442 067
- US-A- 4 157 959

## Description

La présente invention concerne un appareil de séparation d'au moins deux éléments contenus dans un fluide liquide ou gazeux à l'aide d'un matériau filtrant ou absorbant.

On a déjà proposé, notamment par le document EP.A.0152711, un appareil dont la chambre de séparation a un volume et des dimensions variables, l'une des faces d'extrémité de la chambre de séparation consistant en un piston, monté coulissant dans une enceinte cylindrique sous l'effet d'un moyen moteur ; dans ce document, le liquide à traiter est alimenté par la tige creuse du piston Cet appareil permet de réaliser des essais de séparation dans des conditions de pression variées.

Le but de la présente invention est de proposer un appareil qui permette d'employer, sans modifications de sa structure, un grand nombre de matériaux filtrants ou absorbants, quelles que soient leurs natures et leurs propriétés, qui soit simple de mise en oeuvre en particulier lors des changements de matériaux filtrants ou absorbants, qui soit facile à réaliser et qui soit bon marché à l'achat et en entretien. De plus cet appareil doit permettre de réaliser des essais dans les conditions opératoires les plus variées en pression et de façon plus particulière en température.

Ce but est atteint par l'appareil de l'invention qui est du type connu, en particulier par le document EP-A-0152711, en ce qu'il comprend :
- une enceinte cylindrique dans laquelle coulisse un piston muni d'une tige creuse de guidage, et qui délimite une chambre de séparation entre le fond de l'enceinte et la face supérieure du piston,
- un conduit d'alimentation ménagé dans la tige de guidage et un conduit d'évacuation, lesdits conduits débouchant dans la chambre de séparation respectivement au voisinage de la face inférieure du piston et du fond de l'enceinte.

Selon l'invention, l'enceinte cylindrique est constituée de trois éléments distincts, à savoir un cylindre de piston, une paroi de fond et une paroi de couvercle, qui sont aptes à être assemblés de manière étanche grâce à des joints toriques. Dans ce cas, l'appareil comporte également une plaque de support sur laquelle est fixée ladite paroi de fond, une plaque de couvercle fixée au dessus de ladite paroi de couvercle et des tirants de fixation disposés à l'extérieur du cylindre de piston et aptes à relier de manière amovible la plaque support et la plaque de couvercle. La face supérieure du piston est plane, délimite avec la paroi de couvercle et le cylindre de piston un espace étanche apte à être relié à une source de fluide sous pression à l'aide d'un orifice ménagé dans le couvercle obturateur formé par la plaque de couvercle et la paroi de couvercle, et est apte à soulever la couvercle obturateur lorsque, la plaque de couvercle étant désolidarisée de la plaque support et le conduit d'alimentation étant obturé, on introduit par le conduit d'évacuation un fluide sous pression.

Avantageusement, l'appareil comporte également un cylindre de protection amovible et apte à être assemblé, de manière étanche grâce à au moins un joint torique et aux tirants de fixation, concentriquement avec le cylindre du piston, entre la plaque de support et la plaque de couvercle. Dans ce cas, des orifices ménagés dans les plaques de support et de couvercle débouchent dans la chambre annulaire étanche entre le cylindre de piston et le cylindre de protection de manière à permettre la circulation d'un fluide dans ladite chambre annulaire.

Ainsi on peut faire circuler dans la chambre annulaire étanche, entourant la chambre de séparation, un fluide, par exemple de l'eau portée à une température déterminée de manière à tester le matériau filtrant ou absorbant à cette température.

L'appareil est ainsi particulièrement bien adapté, au niveau expérimental, pour comparer les caractéristiques de différents médias entre eux en faisant varier les conditions de pression, de température, la densité du matériau absorbant lorsque celui-ci est compressible, afin de prédéterminer les conditions optimales d'utilisation d'un matériau absorbant et plus encore un échangeur d'ions en fonction de sa cinétique d'échange et ce, pour un taux d'épuration souhaité, en vue d'un dimensionnement d'installation, et afin d'étudier les couplages entre différentes techniques séparatives.

Le piston comprend un bloc cylindrique ayant une face d'extrémité annulaire, et comprend un premier tamis rigide fixé à ladite face d'extrémité annulaire. Dans ce cas, une cavité de répartition ayant une forme de préférence conique est ménagée dans ledit bloc cylindrique au-dessus dudit premier tamis rigide à partir de ladite face d'extrémité annulaire, et le conduit d'alimentation débouche dans la partie supérieure de ladite cavité de répartition.

Grâce à cette structure, le fluide à traiter circule de façon uniforme dans toute la largeur de la couche de matériau filtrant ou absorbant et il ne se produit pas d'effet de cheminée entre le point d'entrée du fluide à traiter dans la chambre de séparation et le point de sortie du fluide après traitement.

Un contre-piston ayant une face d'extrémité supérieure annulaire est disposé dans ledit cylindre de piston au-dessus de ladite paroi de fond. Un deuxième tamis rigide est fixé à ladite face d'extrémité annualire. Une cavité de collecte ayant une forme conique et ménagée dans ledit contre-piston à partir de ladite face d'extrémité annulaire. Le conduit d'évacuation débouche dans la partie inférieure de ladite cavité de collecte.

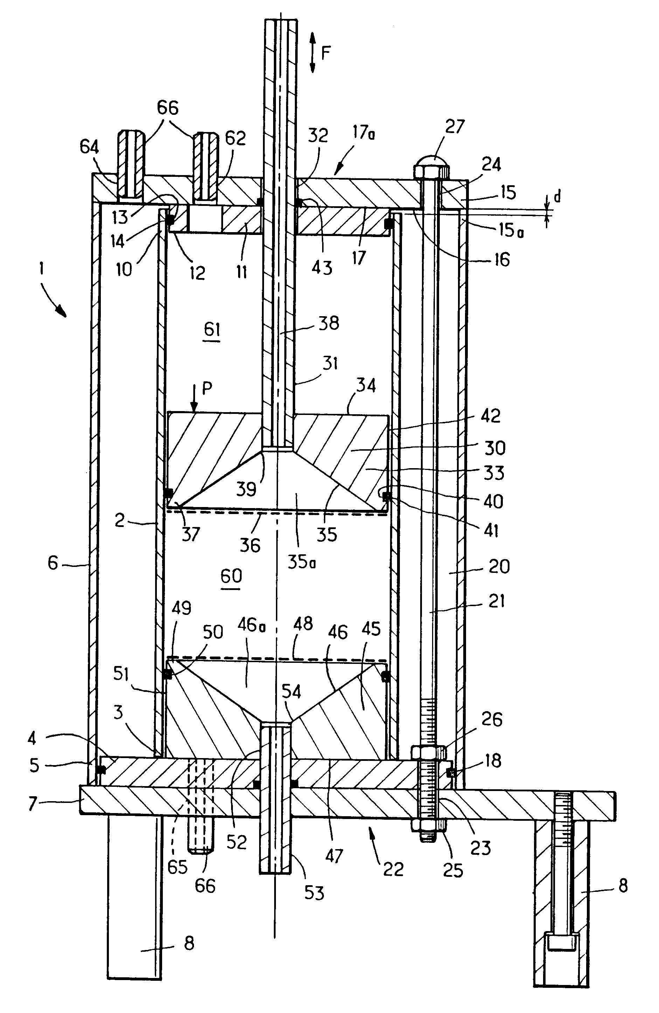

D'autres caractéristiques et avantages de l'invention apparaîtront à la lecture d'un mode de réalisation de l'appareil donné ci-après à titre illustratif et en référence au dessin annexé dans lequel :
la figure unique représente un appareil selon l'invention vu en coupe verticale.

Comme on le voit sur le dessin, l'appareil de séparation 1 comprend un cylindre de piston 2 disposé à la verticale reposant par son extrémité inférieure 3 sur une paroi de fond 4 s'étendant à l'extérieur du cylindre de piston 2 et emmanchée dans la partie inférieure 5 d'un cylindre de protection 6 creux disposé coaxialement autour du cylindre de piston 2. La paroi de fond 4 et l'extrémité inférieure 5 du cylindre de protection 6 reposent sur une plaque 7 disposée à l'horizontale et servant de support à l'appareil. Sous la plaque de support 7, sont fixés des pieds 8, au nombre de trois sur le dessin destinés à maintenir l'appareil 1 sur une table non représentée.

L'extrémité supérieure 10 du cylindre de piston 2 est obturée par une paroi de couvercle 11, ayant la forme d'un disque circulaire d'un diamètre voisin du diamètre intérieur du cylindre de piston 2 et munie sur son pourtour 12 d'une gorge 13 destinée à recevoir un joint torique 14 assurant l'étanchéité.

L'extrémité supérieure 15a du cylindre de protection 6 est également obturée par une plaque de couvercle 15 disposée au-dessus du cylindre de protection 6. La hauteur du cylindre de protection 6 est supérieure à la hauteur du cylindre de piston 2 de telle manière que la face inférieure 16 de la plaque de couvercle 15 soit jointive avec la face supérieure 17 de la paroi de couvercle 11 et que l'extrémité supérieure 10 du cylindre de piston 2 soit écartée de la face inférieure 16 de la plaque de couvercle 15 d'une distance d. La plaque de couvercle 15 et la paroi de couvercle 11 sont de préférence assemblées l'une à l'autre par leurs faces adjacentes 16 et 17, de manière à constituer un couvercle d'obturation 17a du cylindre de piston 2 et du cylindre de protection 6. De la même manière, la paroi de fond 4 est assemblée sur la plaque de support 7, et un joint torique 18 est également disposé entre l'extrémité inférieure 5 du cylindre de protection 6 et la paroi de fond 4.

Dans l'espace annulaire 20 situé entre le cylindre de piston 2 et le cylindre de protection 6 sont disposés un certain nombre de tirants de fixation 21 disposées à la verticale et traversant, d'une part, l'ensemble 22 constitué par la plaque de fond 4 et la plaque de support 7 par un alésage 23 ménagé dans cet ensemble 22 et, d'autre part, la plaque de couvercle 15 par un alésage 24 prévu dans la plaque de couvercle 15. Chaque tirant de fixation 2 est fixé à l'ensemble 22 par un écrou 25 et un contre-écrou 26, et un écrou d'extrémité 27 disposée au-dessus de la plaque de couvercle 15 assure la fermeture du cylindre de piston 2 et du cylindre de protection 6, de telle manière que la chambre annulaire 20 soit étanche.

Le cylindre de protection 6 a plusieurs fonctions. Il joue d'abord son rôle de protecteur en cas de bris du cylindre de piston 2. Il sert également à maintenir l'écartement entre la plaque de support 7 et la plaque de couvercle 15 de manière à assurer le maintien de la distance d entre l'extrémité supérieure 10 du cylindre de piston 2 et la face inférieure 16 de la plaque de couvercle 15.

Dans le cylindre de piston 2, peut coulisser un piston 30 muni d'une tige de guidage 31 traversant le couvercle obturateur 17a par un alésage vertical 32. Le piston 31 comporte un bloc cylindrique 33 dont la face supérieure 34 est plane et dont la face inférieure 35 a la forme d'une cloche ou une forme conique, et un premier tamis rigide 36 ou grille fixé à la face d'extrémité inférieure annulaire 37 du bloc cylindrique 33. Une cavité de répartition 35a est ainsi ménagée entre le premier tamis 36 et la face inférieure 35. La tige de guidage 31 est creuse et possède un conduit d'alimentation longitudinal 38 débouchant dans la partie supérieure 39 de la cavité de répartition 35a. Une gorge 40 destinée à recevoir un joint d'étanchéité 41 est ménagée dans la paroi latérale 42 du piston 30. Un joint d'étanchéité 43 est prévu dans l'alésage 32.

Un contre-piston 45 dont la face supérieure 46 a la forme d'une cuvette conique est disposé dans le cylindre de piston 2 au-dessus de la paroi de fond 4. Le contre-piston 45 est collé par sa face inférieure 47 à la paroi de fond 4. Un deuxième tamis rigide ou grille 48 est fixé à la face d'extrémité annulaire supérieure 49 du contre-piston 45 et un joint d'étanchéité 50 est prévu entre la face latérale 51 du contre-piston 45 et le cylindre de piston 2. Une cavité de collecte 46a est ainsi ménagée entre le deuxième tamis 48 et la face supérieure 46 du contre-piston 45. Un alésage vertical 52 traverse de part en part le contre-piston 45 et l'ensemble 22 et dans cet alésage 52 passe un tube d'évacuation 53 débouchant dans la partie inférieure 54 de la cavité de collecte 46a.

De façon préférentielle, mais ce n'est pas obligatoire, le contre-piston 45 avec le tube d'évacuation 53, et le deuxième tamis rigide 48 a une configuration identique au piston 30 muni de sa tige de guidage 31.

Les tamis rigides 36 et 48 constituent les extrémités opposées d'une chambre de séparation 60 destinée à loger un matériau filtrant ou absorbant non représenté. Le fluide à traiter est introduit dans la chambre 60 par le conduit d'alimentation 38 et se répartit uniformément sur le premier tamis rigide 36 grâce à la forme en cloche de la face inférieure 35 du bloc cylindrique 33. Le fluide épuré s'écoulent par le tamis rigide 48 est collecté par le tube d'évacuation 53 au fond 54 de la cuvette 46. Le fluide à traiter peut naturellement circuler en sens inverse du tube 53 vers le conduit 38.

La face supérieure 34 du piston 30 et la paroi de couvercle 11 délimitent une deuxième chambre 61 qui communique avec une source de fluide sous pression non représentée par un orifice 62 ménagée dans le couvercle obturateur 17a, un deuxième orifice non représenté destiné à faire communiquer la deuxième chambre 61 avec un manomètre et/ou une soupape de sécurité peut également être ménagé dans le bouchon obturateur 17a.

L'espace annulaire 20 situé entre le cylindre de piston 2 et le cylindre de protection 6 communique avec une source de fluide non représentée à l'aide d'un orifice 64 ménagé dans la plaque de couvercle 15 et un orifice 65 ménagé dans l'ensemble 22 comprenant la paroi de fond 4 et la plaque de support 7. Des raccords 66 en forme de tube sont sertis dans les orifices 62, 64 et 65.

Dans l'espace annulaire 20, on peut ainsi faire circuler un fluide, par exemple de l'eau, à une température donnée, de telle manière que l'appareil en fonctionnement soit thermostaté. Par l'orifice 62, on peut introduire de l'air sous pression de manière à actionner le piston 30 vers le bas et à comprimer le matériau filtrant ou absorbant contenu dans la chambre 60.

Les tamis rigides ou grilles 36 et 48 possèdent une pluralité d'orifices verticaux par lesquels circule le fluide à traiter. Les tamis rigides 36 et 48 sont fabriqués dans un matériau résistant à la corrosion. Les tamis rigides 36 et 48 sont fixés respectivement aux faces d'extrémité annulaires 37 et 49 du bloc cylindrique 33 et du contre-piston 45 ou sont plaqués contre ces faces d'extrémité annulaires lors de l'utilisation de l'appareil 1, grâce au matériau filtrant ou absorbant contenu dans la chambre 60 entre les deux tamis rigides 36 et 48, par déplacement vertical vers le bas de la tige de guidage 31 selon la flèche F ou par l'action de la source de pression qui exerce une pression P sur la face supérieure 34 du piston 30. Le piston 30 coulissant dans le cylindre de piston 2 constitue les moyens permettant de modifier la distance séparant les faces d'extrémité 36 et 48 de la chambre de séparation 60. La face supérieure 34 du piston 30, la deuxième chambre 61 et l'orifice 62, associés à la source de fluide sous pression constituent les moyens permettant de modifier le taux de compression du matériau filtrant ou absorbant.

La circulation du fluide à traiter dans la chambre 60 peut se faire dans le sens de bas en haut ou de haut en bas, soit par gravimétrie, soit par l'action d'une pompe refoulante installée dans le conduit d'alimentation, soit par l'action d'une pompe aspirante installée dans le conduit d'évacuation.

Le remplacement du matériau filtrant ou absorbant contenu dans la chambre de séparation 60 se fait de la façon que l'on va décrire.

Pour remplacer le matériau filtrant ou absorbant, la chambre 61 est mise en liaison avec l'air extérieur, on enlève les écrous d'extrémités 27, on obture le conduit d'alimentation 38 et on met en communication le tube d'évacuation 53 avec une source de fluide sous pression, de l'eau par exemple. La pression exercée dans la chambre 60 entraîne le piston 30 vers le haut, et lorsque la face supérieure 34 du piston 30 est en contact avec le couvercle obturateur 17a, le couvercle obturateur est soulevé par le piston 30 jusqu'à l'extraction du piston 30 du cylindre de piston 2. Le matériau filtrant ou absorbant peut alors être retiré de la chambre 60 et remplacé par un matériau filtrant ou absorbant de même type ou d'un autre type, ayant la même épaisseur ou une épaisseur différente.

La remise état de marche de l'appareil se fait de façon inverse en introduisant le piston 30 par l'extrémité supérieure 10 du cylindre de piston 2, puis en mettant en place le couvercle obturateur 17a. Après avoir serré les boulons d'extrémité 27 et raccordé correctement le conduit d'alimentation 38, le tube d'évacuation 53 et le raccord 66 de l'orifice 62 relié à la source de fluide sous pression, la chambre 61 peut être mise sous pression, ce qui fait descendre le piston 30 et comprime le matériau filtrant ou absorbant.

Les diverses pièces de l'appareil ci-dessus décrit peuvent être réalisées dans différents matériaux. De préférence, vu la diversité des conditions d'utilisation de l'appareil, les matériaux choisis doivent être résistants en milieu acide, neutre ou basique. Pour les besoins des laboratoires, le cylindre de piston 2 sera de préférence dans un verre résistant aux hautes températures de type "pyrex" et portera des graduations permettant de mesurer à l'oeil nu la distance séparant les tamis rigides 36 et 48, les autres éléments à l'exception des joints et de la visserie seront réalisés dans un matériau en matière plastique résistant et transparent de préférence de type "plexiglas", ou sont réalisés en polycarbonate ou en inox.

Diverses modifications peuvent être apportées par l'homme du métier à l'appareil décrit. En particulier, le couvercle obturateur 17a peut être réalisé en une seule pièce, l'ensemble 22 comprenant la plaque de support 7 et la paroi de fond 4 peut être réalisé en une seule pièce avec le cylindre de fond 45. L'écartement entre la paroi de fond et la plaque de couvercle 15 peut être maintenu par un manchon cylindrique creux entourant chaque tirant 21 et disposé entre la paroi de fond 4 et la plaque de couvercle 15.

## Revendications

1. Appareil de séparation d'au moins deux éléments contenus dans un fluide liquide ou gazeux à l'aide d'un matériau filtrant ou absorbant ledit appareil comprenant :
- une enceinte cylindrique dans laquelle coulisse un piston (30) muni d'une tige (31) creuse de guidage, et qui délimite une chambre de séparation (60) entre le fond de l'enceinte et la face supérieure du piston,
- un conduit d'alimentation (38) ménagé dans la tige de guidage (31) et un conduit d'évacuation (53), lesdits conduits débouchant dans la chambre de séparation (60) respectivement au voisinage de la face inférieure du piston et du fond de l'enceinte,
caractérisé en ce que :
l'enceinte cylindrique est constituée de trois éléments distincts, à savoir un cylindre de piston (2), une paroi de fond (4) et une paroi de couvercle (11), qui sont aptes à être assemblés de manière étanche grâce à des joints toriques (13,50),
- en ce qu'il comporte une plaque de support (7) sur laquelle est fixée ladite paroi de fond (4), une plaque de couvercle (15) fixée au dessus de ladite paroi de couvercle (11) et des tirants de fixation (21) disposés à l'extérieur du cylindre de piston (2) et aptes à relier de manière amovible la plaque support (7) et la plaque de couvercle (15),
- et en ce que la face supérieure du piston (34) est plane, délimite avec la paroi de couvercle (11) et le cylindre de piston (2) un espace étanche (61) apte à être relié à une source de fluide sous pression à l'aide d'un orifice (62) ménagé dans le couvercle obturateur (17a) formé par la plaque de couvercle (11) et la paroi de couvercle (15), et est apte à soulever le couvercle obturateur (17a) lorsque, la plaque de couvercle (15) étant désolidarisée de la plaque support (4) et le conduit d'alimentation (38) étant obturé, on introduit par le conduit d'évacuation (53) un fluide sous pression.

2. Appareil selon la revendication 1 caractérisé en ce qu'il comporte un cylindre de protection (6) amovible et apte à être assemblé, de manière étanche grâce à au moins un joint torique (18) et aux tirants de fixation, concentriquement avec le cylindre du piston (2), entre la plaque de support (7) et la plaque de couvercle (15), et en ce que des orifices (65,64) ménagés dans les plaques de support (7) et de couvercle (15) débouchent dans la chambre annulaire (20) étanche entre le cylindre de piston (2) et le cylindre de protection (6) de manière à permettre la circulation d'un fluide dans ladite chambre annulaire (20).

3. Appareil selon la revendication 2 caractérisé en ce que les tirants de fixation (21) sont disposés dans la chambre annulaire (20).

4. Appareil selon la revendication 2 caractérisé en ce que la hauteur du cylindre de protection (6) est supérieure à celle du cylindre du piston (2) de sorte que la face supérieure (17) de la paroi de couvercle (11) est située au-dessus de l'extrémité supérieure (10) du cylindre de piston (2).

5. Appareil selon la revendication 1 caractérisé en ce que le couvercle obturateur (17a) formé par la paroi de couvercle (15) et la plaque de couvercle (11) est en une seule pièce.

6. Appareil selon la revendication 1 caractérisé en ce que le piston (30) comprend un bloc cylindrique (33) ayant une face d'extrémité annulaire (37), et comprend un premier tamis rigide (36) fixé à ladite face d'extrémité annulaire (37), en ce qu'une cavité de répartition (35a) ayant une forme de préférence conique est ménagée dans ledit bloc cylindrique (33) au-dessus dudit premier tamis rigide (36) à partir de ladite face d'extrémité annulaire (37), et ence que ledit conduit d'alimentation (38) débouche dans la partie supérieure (39) de ladite cavité de répartition (35a).

7. Appareil selon l'une des revendications 1 ou 6, caractérisé en ce qu'un contre-piston (45) ayant une face d'extrémité supérieure annulaire (49) est disposé dans ledit cylindre de piston (2) au-dessus de ladite paroi de fond (4), en ce qu'un deuxième tamis rigide (48) est fixé à ladite face d'extrémité annulaire (49), en ce qu'une cavité de collecte (46a) ayant une forme de préférence conique est ménagée dans ledit contre-piston (45) à partir de ladite face d'extrémité annulaire (49) et en ce que le conduit d'évacuation (53) débouche dans la partie inférieure (54) de ladite cavité de collecte (46a).

8. Appareil selon la revendication 7 caractérisé en ce que l'ensemble (22) comprenant la plaque support (7), la paroi de fond (4) et le contre-piston (45) sont en une seule pièce.

9. Appareil selon la revendication 1 caractérisé en ce que le cylindre de piston (2) comporte des graduations destinées à mesurer la distance séparant les deux faces d'extrémités de la chambre de séparation (60).

## Claims

1. Apparatus for separating at least two elements contained in a liquid or gaseous fluid by means of an absorbant or filtering material, the apparatus comprising:
- a cylindrical enclosure inside which slides a piston (30) provided with a hollow guide rod (31), and which delimits a separation chamber (60) between the bottom of the enclosure and the top face of the piston,
- an inlet duct (38) provided in the guide rod (31) and an outlet duct (53) both of which open out into the separation chamber (60) respectively in the vicinity of the bottom face of the piston and of the bottom of the enclosure,
characterized in that:
the cylindrical enclosure is constituted of three separate elements, namely a piston cylinder (2), a bottom wall (4) and a lid wall (11), which can be sealed off by two sealing rings (13, 50),
- and in that it comprises a support plate (7) on which said bottom wall (4) is fixed, a lid plate (15) fixed above said lid wall (11) and tie rods (21) diposed outside the piston cylinder (2) and capable of removably joining together the support plate (7) and the lid plate (15),
- and in that the top face of the piston (34) is flat, delimits with the lid wall (11) and the piston cylinder (2) a tight space (61) which can be connected with a source of fluid under pressure via an orifice (2) provided in the closure lid (17a) formed by the lid plate (11) and the lid wall (15), and is capable of lifting the closure lid (17a) when, the lid plate (15) being disconnected from the support plate (4) and the inlet duct (38) being closed off, a fluid under pressure is introduced through the outlet tube (53).

2. Apparatus according to claim 1, characterized in that it comprises a removable protection cylinder (6) which can be assembled, in sealed manner, by means of at least one sealing ring (18) and of the tie rods, concentrically to the piston cylinder (2), between the support plate (7) and the lid plate (15), and in that orifices (65, 64) provided in the support plate (7) and lid plate (15) open out into the sealed annular chamber (20) between the piston cylinder (2) and the protection cylinder (6) so as to enable the fluid to flow through said annular chamber (20).

3. Apparatus according to claim 2, characterized in that the tie rods (21) are disposed inside the annular chamber (20).

4. Apparatus according to claim 2, characterized in that the height of the protection cylinder (6) is greater than that of the piston cylinder (2) so that the top face (17) of the lid wall (11) is situated above the top end (10) of the piston cylinder (2).

5. Apparatus according to claim 1, characterized in that the closure lid (17a) formed by the lid wall (15) and the lid plate (11) is in one piece.

6. Apparatus according to claim 1, characterized in that the piston (30) comprises a cylinder block (33) having an annular end face (37), and comprises a first rigid screen (36) fixed to said annular end face (37), in that a distribution cavity (35a) of prepferably conical shape is provided in said cylinder block (33) above said first rigid screen (36) running from said annular end face (37), and in that said inlet ducts (38) opens out into the top portion (39) of said distribution cavity (35a).

7. Apparatus according to one of claims 1 or 6, characterized in that a counter-piston (45) having an annular top end face (49) is disposed in said piston cylinder (2) above said bottom wall (4), and in that a second rigid screen (48) is fixed to said annular end face (49), in that a collecting cavity (46a) of preferably conical shape is provided in said counter-piston (45) running from said annular end face (49) and in that the outlet duct (53) opens out into the lower portion (54) of said collecting cavity (46a).

8. Apparatus according to claim 7, characterized in that the assembly (22) comprising the support plate (7), the bottom wall (4) and the counter-piston (45) are in one piece.

9. Apparatus according to claim 1, characterized in that the piston cylinder (2) comprises graduations for measuring the distance separating the two end faces from the separation chamber (60).

## Patentansprüche

1. Vorrichtung zum Trennen von mindestens zwei in einem flüssigen oder gasförmigen Fluid enthaltenen Elementen mit Hilfe eines Filter- oder Absorptionsmaterials, wobei die genannte Vorrichtung folgende Teile umfaßt:
- einen zylindrischen Behälter, in dem ein mit einer hohlen Führungsstange (31) versehener Kolben (30) gleitet, und der zwischen dem Boden des Behälters und der Oberseite des Kolbens eine Trennkammer (60) bildet,
- einen in die Führungsstange (31) gearbeiteten Zufuhrkanal (38) und einen Ablaßkanal (53), wobei die beiden Kanäle in die Trennkammer (60) bzw. nahe der Unterseite des Kolbens und des Bodens des Behälters münden,
dadurch gekennzeichnet, daß
der zylindrische Behälter aus drei bestimmten Elementen besteht, und zwar einem Kolbenzylinder (2), einer Bodenplatte (4) und einer Deckplatte (11), die mit Hilfe von O-Ringen (13, 50) dicht abschließend zusammengebaut werden können,
- die Vorrichtung eine Auflageplatte (7) aufweist, auf der die besagte Bodenplatte (4) befestigt ist, sowie eine Deckelplatte (15), die über der genannten Deckplatte (11) befestigt ist, sowie Spannstangen (21), die außerhalb des Kolbenzylinders (2) angeordnet sind und die Auflageplatte (7) und die Deckelplatte (15) beweglich miteinander verbindet,
- sowie dadurch, daß die Oberseite (34) des Kolbens eben ist, mit der Deckplatte (11) und dem Kolbenzylinder (2) einen dicht abgeschlossenen Raum (61) bildet, der an eine Druckfluidquelle angeschlossen werden kann, und zwar über eine in den Verschlußdeckel (17a), der aus der Deckelplatte (15) und der Deckplatte (11) gebildet wird, gearbeitete Öffnung (62), und daß sie den Verschlußdeckel (17a) anheben kann, wenn man, nachdem die Deckelplatte (15) von der Auflageplatte (7) gelöst und der Zufuhrkanal (38) geschlossen wurden, durch den Ablaßkanal (53) ein Druckfluid einleitet.

2. Vorrichtung nach Anspruch 1, dadurch gekennzeichnet, daß sie einen abnehmbaren Schutzzylinder (6) umfaßt, der dicht abschließend mit Hilfe mindestens eines O-Rings (18) und der Spannstangen (21) konzentrisch mit dem Kolbenzylinder (2) zwischen der Auflageplatte (7) und der Deckelplatte (15) verbunden werden kann, sowie dadurch, daß in die Auflageplatte (7) und Deckelplatte (15) gearbeitete Öffnungen (65, 64) in die ringförmige, dicht abschließende Kammer (20) zwischen dem Kolbenzylinder (2) und dem Schutzzylinder (6) münden und so die Zirkulation eines Fluids in dieser ringförmigen Kammer (20) erlauben.

3. Vorrichtung nach Anspruch 2, dadurch gekennzeichnet, daß die Spannstangen (21) in der ringförmigen Kammer (20) angeordnet sind.

4. Vorrichtung nach Anspruch 2, dadurch gekennzeichnet, daß der Schutzzylinder (6) höher ist als der Kolbenzylinder (2), so daß die Oberseite (17) der Deckplatte (11) oberhalb des oberen Endes (10) des Kolbenzylinders (2) liegt.

5. Vorrichtung nach Anspruch 1, dadurch gekennzeichnet, daß der von der Deckelplatte (15) und der Deckplatte (11) gebildete Verschlußdeckel (17a) aus einem Stück ist.

6. Vorrichtung nach Anspruch 1, dadurch gekennzeichnet, daß der Kolben (30) einen zylindrischen Block (33) mit einer ringförmigen Abschlußfläche (37) aufweist und außerdem ein erstes starres Sieb (36), das an der besagten ringförmigen Abschlußseite (37) befestigt ist, sowie dadurch, daß in den besagten zylindrischen Block (33) oberhalb des ersten starren Siebs (36) von der besagten ringförmigen Abschlußseite (37) aus ein Verteilungshohlraum (35a) gearbeitet ist, der vorzugsweise konisch ist, und dadurch, daß der Zufuhrkanal (38) in den oberen Teil (39) des besagten Verteilungshohlraums (35a)mündet.

7. Vorrichtung nach Anspruch 1 oder 6, dadurch gekennzeichnet, daß ein Gegenkolben (45) mit einer ringförmigen oberen Abschlußflache (49) im besagten Kolbenzylinder (2) oberhalb der besagten Bodenplatte (4) angebracht wird, sowie dadurch, daß ein zweites starres Sieb (48) an der besagten ringförmigen Abschlußfläche (49) befestigt wird, dadurch, daß in den besagten Gegenkolben (45) von der besagten ringförmigen Abschlußseite (49) aus ein konischer Sammelhohlraum (46a) gearbeitet ist, und dadurch, daß der Ablaßkanal (53) in den unteren Teil (54) des besagten Sammelhohlraums (46a) mündet.

8. Vorrichtung nach Anspruch 7, dadurch gekennzeichnet, daß die Einheit (22) aus Auflageplatte (7), Bodenplatte (4) und Gegenkolben (45) aus einem Stück ist.

9. Vorrichtung nach Anspruch 1, dadurch gekennzeichnet, daß der Kolbenzylinder (2) eine Skala aufweist, die dazu dient, den Abstand zwischen den beiden Abschlußseiten der Trennkammer (60) zu messen.
